## Europäisches Patentamt

(19) **European Patent Office**

**Office européen des brevets**

(11) Publication number: **0 263 587**
**B1**

(12) **EUROPEAN PATENT SPECIFICATION**

(45) Date of publication of the patent specification:
**19.09.90**

(51) Int. Cl.⁵: **F16B 5/07**

(21) Application number: **87307469.4**

(22) Date of filing: **24.08.87**

(54) **Intermeshable articles.**

(30) Priority: **08.09.86 US 904358**

(43) Date of publication of application:
**13.04.88 Bulletin 88/15**

(45) Publication of the grant of the patent:
**19.09.90 Bulletin 90/38**

(84) Designated Contracting States:
**DE ES FR GB IT NL SE**

(56) References cited:
**CH-A- 370 285**
**DE-A- 1 807 993**
**DE-A- 1 915 098**
**DE-A- 1 933 456**
**DE-A- 2 352 676**
**DE-U- 7 516 421**
**FR-A- 2 564 158**
**US-A- 3 101 517**
**US-A- 3 192 589**
**US-A- 3 742 663**

(73) Proprietor: **MINNESOTA MINING AND MANUFACTURING COMPANY, 3M Center, P.O. Box 33427, St. Paul Minnesota 55133-3427(US)**

(72) Inventor: **Appeldorn, Roger H. c/o Minnesota Mining and, Manufacturing Company 2501 Hudson Road, P.O. Box 33427 St. Paul Minnesota 55133(US)**

(74) Representative: **Baillie, Iain Cameron, c/o Ladas & Parry Isartorplatz 5, D-8000 München 2(DE)**

Description

Field of the Invention

The present invention relates to a set of intermeshable articles, and in one aspect to articles having a structured surface on one side. The structured surface of such an article may be brought into contact with itself, another similar article or the structured surface of a dissimilar article for a multitude of purposes, such as, for example, fastening.

Background of the Invention

There are a number of ways known by those skilled in the art to fasten, couple, or connect items. For example, it has been proposed to taper the sides of a shaft so that the head portion consisting of, for example, a toothbrush or tool, may be attached thereto, while permitting removal and interchange of the head portion, as disclosed in U.S.-A 1,887,913 (Bell), 3,039,340 (Livermont), 3,182,345 (Smith) and 3,369,265 (Halberstadt et al). Also, intermeshing joints have been utilized for connecting in woodworking, as disclosed in U.S.-A 1,212,262 (Rockwell), 1,214,261 (Balbach), 1,342,979 (Beitner) and 1,954,242 (Heppenstall), and in metal working, as disclosed in U.S. Pat. No. 2,895,753 (Fentiman) and 3,000,658 (Sprouse). Further, inclined or tapered shafts have been utilized for interconnecting the ends of leather washers, as illustrated in U.S. Pat. No. 281,760 (Gingras). However, all of the above have utilized a single shaft and, in some instances, either provided protruding elements along the sides or a T-shaped like-end to provide additional mechanical interference to enhance fastening.

In addition, several fasteners have been disclosed in the art for attaching items together. For example, loops and hooks have been utilized whereby when the hooks are brought into contact with the loops the former interlocks with the latter, as disclosed in U.S.-A 2,717,437 (Mestra) and 3,009,235 (Mestra). Also, a plurality of macro asperties or protrusions have been utilized which may either be brought into contact with similarly shaped macro asperties or with correspondingly shaped recesses, as disclosed in U.S.-A 2,499,898 (Anderson), 3,192,589 (Pearson), 3,266,113 (Flanagan, Jr.), 3,408,705 (Kayser et al.), and 4,520,943 (Nielsen). In addition, fasteners utilizing a plurality of longitudinally extending rib and groove elements which deform and mechanically interfere and resiliently interlock with each other have been disclosed, for example, in U.S.-A 2,144,755 (Freedman), 2,558,367 (Madsen), 2,780,261 (Svec et al.), 3,054,434 (Ausnit et al.), 3,173,184 (Ausnit), 3,198,228 (Naito) and 3,633,642 (Siegel).

Further, containers of the type commonly known as "Tupperware" containers (Tupperware is a registered trademark of Kraft, Inc.) and the many similar containers are disclosed, for example, in U.S.-A 2,487,400 (Tupper), 3,335,774 (Reed), 3,618,802 (Yates, Jr.), 3,730,382 (Heisler), and 3,817,420 (Heisler). The covers of such containers are precisely sized and when mounted, the covers are stretched to cause a tension to be developed in the cover rims between inner and outer retaining lip portions to provide mechanical interlocking for closure.

Summary of the Invention

In contrast to the ways of fastening, closing, coupling and connecting of the prior art acknowledged above, the article of the present invention provides a way of adhering the article to itself, another similar article or the structured surface of a dissimilar article at least partially because of the frictional characteristics of the material of the adhering items. In addition, because adherence is related to friction, no macro deformation or mechanical interference is required.

The set of intermeshable articles of the present invention is set out in detail in claim 1 below and includes two members which each have at least one major surface and at least a portion of that surface is a structured surface. The structured surface is made up of a plurality of tapered elements. Each element has at least one side inclined relative to the plane of the member at an angle sufficient to form a taper such that each element will mesh with at least one corresponding element when brought into contact with the corresponding element and adhere thereto at least partially because of the frictional characteristics of the contacting surfaces.

There are a multitude of potential uses for the above described intermeshable article where it may be desirable to bring the structured surface of the article into contact with itself, another similar article or the structured surface of a dissimilar article for fastening, closing, coupling and connecting, to name but a few.

Brief Description of the Drawings

The present invention will be more fully described with reference to the accompanying drawings wherein like reference numerals identify corresponding components, and:

Figure 1 is an enlarged perspective view of the intermeshable article of the present invention;

Figures 2, 3, and 4 are cross-sectional views of the article illustrated in Figure 1 showing a progression of two similar articles being brought into contact with one another;

Figure 5 is an enlarged cross-sectional view of tho elements of the article of the present invention depicted in Figure 1;

Figure 6 is an enlarged cross-sectional view illustrating a variation of the elements of the present invention;

Figures 7 and 8 are cross-sectional views of alternate embodiments of the article of the present invention; and

Figures 9 and 10 are plan views of alternate embodiments of the article of the present invention.

## Detailed Description of the Preferred Embodiment

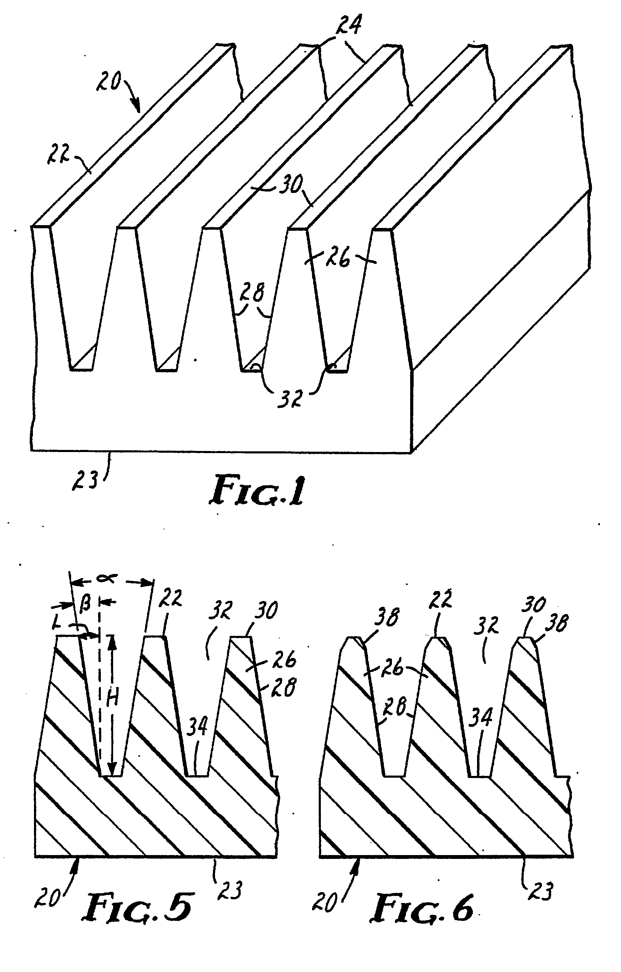

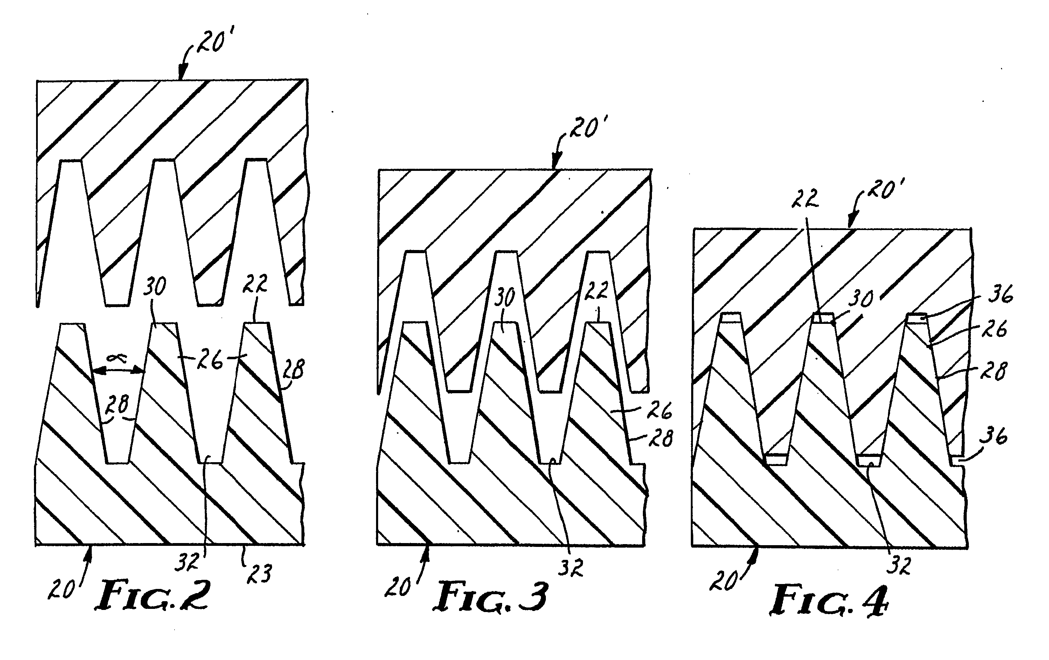

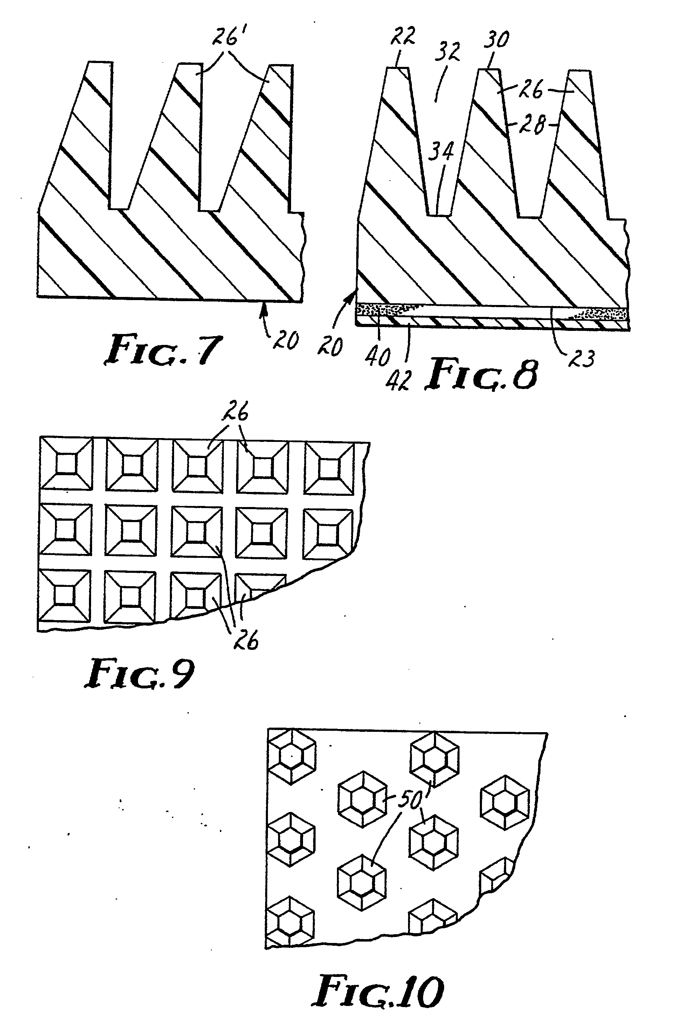

Referring to Figure 1 of the drawings, an intermeshable article of the present invention, generally designated 20, is illustrated. The article includes a member which has two major surfaces 22 and 23, and at least one of which is a structured surface 24. The structured surface includes a plurality of tapered elements 26, and each element has at least one side 28. In the illustrated article 20, the elements 26 each have two sides and are arranged side by side to form a plurality of linear ridges 30 and grooves 32.

The sides 28 of each element are inclined relative to the plane of the article at an angle sufficient to form a taper such that each element will mesh with at least one corresponding element of, for example, another similar article 20', as illustrated in Figures 2, 3 and 4. Then when they are brought into contact with one another, the elements will adhere to one another, at least partially, because of the frictional characteristics of the contacting surfaces without macro deformation, or mechanical interference or interlocking of the elements being required. However, it is believed that deformation of any surface irregularities or random micro asperties does take place, but only on a microscopic scale which contributes to adherence by increasing the amount of actual area contact between the surfaces. Thus, it is preferred that the contacting surfaces be optically smooth to decrease macro deformation and to increase adherence for some applications.

With reference to Figure 5, it has been observed that when the tangent of the half angle β is approximately equal to or less than the coefficient of friction μ of the material of the contacting surfaces, adherence between the two articles 20 and 20', is substantially increased. Thus, one can utilize the relationship between the coefficient of friction μ and the total included angle α in designing articles by the following equations

(1) $\mu = {}^L\!/_H$

(2) $\mu = \tan \alpha/2$

(3) $\alpha = 2 \arctan \mu$

where $\beta = \alpha/2$ and the slope of the taper $= {}^L\!/_H$.

In the preferred embodiment, as illustrated in Figure 1 and in greater detail in Figure 5, each groove 32 is provided with a trough 34 which separates adjacent elements. Also, each element 26 is sized such that when the elements are brought into contact with one another to mesh, they will contact each other only along the sides of elements. This provides a cavity 36, as illustrated in Figure 4, and facilitates adherence, the degree of which may vary depending upon the angle of the taper and/or the frictional forces associated with the sides of the intermeshing elements. The cavity 36 insures side contact. Each ridge 30 and trough 34 can touch (not shown) as long as the force associated with that contact and tending to push the members apart is not greater than the retaining force originating at the sides 28. To facilitate alignment of the elements 26, each ridge may include a portion which may be curved or inclined to form, for example, a chamfered portion 38 as illustrated in Figure 6.

In addition, as illustrated in Figure 7, the elements 26', may be canted with respect to the perpendicular axis of each element relative to the plane of the article to provide directionability of adherence and repositionability.

It should be appreciated that the present invention should not be limited to rows of two sided elements arranged side by side, but may include a number of configured elements such as circular or polygonal as long as each has at least one side as, for example, illustrated in Figures 9 and 10 which may be used for adherence. In Figure 9, rows of four sided elements 26 are arranged so that they may mesh with corresponding elements when brought into contact therewith. Also, as illustrated in Figure 10, a plurality of six sided elements 50 may be arranged adjacent one another. Alternatively, the elements of one article may be positive elements i.e. protrusions in a surface and the elements of the other article may be negative elements i.e. cavities in a surface so that the positive elements may mesh with the negative elements to adhere thereto.

The particular material used for the article 20 may vary and is not essential to the present invention. Thus, ceramics, glasses, polymers and metals, for example, may be useful. However, polymeric materials, such as commercially available acrylics, vinyls, polyethylenes and polycarbonates, have been found to be useful. Normally, the manufacturers of this product will select the best commercially available material based upon price, application and manufacturing process. In addition, for specialty applications, materials which are biodegradable, conductive or magnetic may also be useful.

There are several ways to mass produce the articles 20 of the present invention which are well known to those skilled in the art, for example, as illustrated in U.S.-A 3,689,346 (Rowland), 4,244,683 (Rowland), 4,576,850 (Martens) and U.K. Patent Application No. GB 2,127,344 A (Pricone et al.), the disclosures of which are hereby incorporated by reference. The particular manufacturing process is not essential to the present invention, and is a matter of choice based upon economics and availability. Presently, prototypes have been made by compression molding sheets of polymethyl methacrylate (PMMA), polyvinyl chloride (PVC) and polyethylene.

The thickness of the article 20 may vary depending upon the particular application, such as a fastener. Thus, the article 20, for some applications, may be formed of a thin, flexible sheet or film so that it can be flexed to allow separation and repositioning of the article.

## Application and Use

There are a multitude of potential uses for the article 20 of the present invention, the most promising of which, due to its ability to mesh and releasably adhere, is as a fastener for such things as, for example, reclosable bags, tapes, and closures, to name but a few. In addition, the structured surface of the article 20 may be brought into contact with itself, another similar article 20 or the corresponding structured surface of a dissimilar article or item, such as a container.

As illustrated in Figure 8, to facilitate placement of such an article a suitable means for mounting the article, such as a coating 40 of an adhesive composition, may be placed on one side 23 of the article. The particular adhesive is not essential to the present invention and may include, for example, ultraviolet curable adhesives of the type disclosed in U.S. Patent No. 4,330,590 (Vesley), the disclosure of which is hereby incorporated by reference. To protect the coating 40, a protective film 42 may be bonded thereto. It is preferred that the film 42 have a release surface to permit it later to be peeled away to expose the adhesive coating so that the article 20 may then be adhered to items. Useful films include, for example, polycarbonate, polymethyl methacrylate, polystyrene, and biaxially-oriented polyethylene terephthalate. In addition, paper or other nonwoven films having a suitable release coating may be used.

Objects and advantages of the invention are further illustrated by the following examples, but the particular material recited in these examples, as well as other conditions and details, should not be construed to unduly limit this invention.

Example 1

Two pieces of intermeshable articles 20, of the type illustrated in Figure 5, were tested for tensile strength and peel strength. Both pieces were of polyvinyl chloride (PVC) having 50 elements per centimeter.

Example 2

Two pieces of intermeshable articles 20, of the type illustrated in Figure 6, were tested for tensile strength and peel strength. Both pieces were of polyvinyl chloride (PVC) having 50 elements per centimeter.

A 10 pound peel tester was used to test various samples from Example 1 and Example 2. The results revealed that more tensile force was needed to break the bond when pulled axially with respect to the grooves. Also, repeatedly separating the grooved material appeared to have no effect on either the tensile or peel strength of the material.

**Claims**

1. Set of intermeshable articles, comprising:
a first member (26) having at least one major surface (23) and at least a portion of said major surface being a structured surface (24);
a second member (24) having at least one major surface and at least a portion of said major surface being a structure surface; characterized in that:
said structured surfaces of said first member and said second member each including a plurality of tapered elements (26), each element having at least one side (28) inclined relative to a common plane in each of said members at an angle (β) sufficient to form a taper so that said elements (26) of said first member (23) may mesh with said elements (26) of said second member (24) when brought into with one another along said inclined sides and said first member (23) may adhere to said second member (24) at least partially because of the frictional force of adherence of said contacting sides (28) of said elements of said first member and said elements of said second member and wherein the tangent of the half angle (β) of the tapered sides of the elements is no greater than the coefficient of friction of the material of the contacting surfaces.

2. The sets of articles defined in claim 1, further characterized in that the elements of said first member are positive elements and the elements of said second member are negative elements whereby said positive elements may mesh with said negative elements and adhere when brought into contact with one another.

3. The set of articles defined in claim 1, further characterized in that each element has two sides and said plurality of elements (26) are arranged side by side to form a plurality of linear ridges (30) and grooves (32), and the sides (28) of adjacent elements form the sides of each groove.

4. The set of articles defined in claim 3, further characterized in that the retaining force originating from the sides (28) of the meshing elements (26) is greater than the force associated with the contact between the ridges (30) and troughs (34).

5. The set of articles defined in claim 3, further characterized in that each element (26) is nonsymmetric and canted with respect to the perpendicular axis of each element relative to the plane of said members.

6. The set of articles defined in claim 1, further characterized in that said ridges (30) of said first member (20) and said second member (20') are truncated.

7. The set of articles defined in claim 6, further characterized in that the elements of at least one member are chamfered to facilitate alignment of said elements.

8. The set of articles defined in claim 3, further characterized in that each groove (32) further comprises a trough (34) between the sides (28) of said grooves to provide a cavity (36) when said elements are brought into contact with one another.

9. The set of articles defined in claim 1, further characterized in that both major surfaces (22) of said first member (20) and said second member (20') are structured surfaces.

10. The set of articles defined in claim 1, further characterized in that mounting means (40, 42) associated with the surface (23) of at least one of said members (20, 20') opposite the structured surface (22) for mounting said article.

11. The set of articles defined in claim 1, further characterized in that said first member (20) and said second member (20') are at least partially of a polymeric material.

**Patentansprüche**

1. Satz von ineinandergreiffähigen Gegenständen mit einem ersten Glied (26), das mindestens eine Hauptfläche (23) besitzt, die mindestens in einem Teil eine strukturierte Fläche (24) ist; einem zweiten Glied (24), das mindestens eine Hauptfläche besitzt, die mindestens in einem Teil eine strukturierte Fläche ist, dadurch gekennzeichnet, daß die strukturierten Flächen des ersten und des zweiten Gliedes jeweils eine Mehrzahl von verjüngten Elementen (26) besitzen, von denen jedes eine Seite (28) besitzt, die gegenüber einer gemeinsamen Ebene in jedem der Glieder unter einem Winkel (β) geneigt ist, der zur Bildung einer Verjüngung genügt, so daß die genannten Elemente (26) des ersten Gliedes (23) und die Elemente (26) des zweiten Gliedes (24) ineinandergreifen können, wenn sie längs der geneigten Seiten miteinander in Berührung gebracht werden, und infolge der zwischen den einander berührenden Seiten (28) der genannten Elemente des ersten Gliedes und der genannten Elemente des zweiten Gliedes wirksamen Haftreibungskraft das erste Glied (23) mindestens teilweise an dem zweiten Glied (24) haften kann, wobei die Tangente des Halbwinkels (β) der verjüngten Seiten der Elemente nicht größer ist als der Reibungskoeffizient des Werkstoffes der einander berührenden Flächen.

2. Satz von Gegenständen nach Anspruch 1, dadurch gekennzeichnet, daß die Elemente des ersten Gliedes positive Elemente und die Elemente des zweiten Gliedes negative Elemente sind, so daß die positiven Elemente mit den negativen Elementen kämmen und an ihnen haften können, wenn sie miteinander in Berührung gebracht werden.

3. Satz von Gegenständen nach Anspruch 1, dadurch gekennzeichnet, daß jedes Element zwei Seiten besitzt, die Mehrzahl von Elementen (26) unter Bildung von linearen Rippen (30) und Nuten (37) nebeneinander angeordnet sind, und die Flanken jeder Nut von den Seiten (28) einander benachbarter Elemente gebildet werden.

4. Satz von Gegenständen nach Anspruch 1, dadurch gekennzeichnet, daß die von den Seiten (28) der miteinander kämmenden Elemente (26) ausgeübte Haltekraft stärker ist als die der Berührung zwischen Rippen (30) und Nuten (32) zugeordnete Kraft.

5. Satz von Gegenständen nach Anspruch 3, dadurch gekennzeichnet, daß jedes Element (26) unsymmetrisch und gegenüber der zu der Ebene der genannten Glieder rechtwinkligen Achse jedes Elements geneigt ist.

6. Satz von Gegenständen nach Anspruch 1, dadurch gekennzeichnet, daß die Rippen (30) des ersten Gliedes (20) und des zweiten Gliedes (20') abgestumpft sind.

7. Satz von Gegenständen nach Anspruch 6, dadurch gekennzeichnet, daß die Elemente mindestens eines Gliedes abgeschrägt sind, um das Fluchten der Elemente zu erleichtern.

8. Satz von Gegenständen nach Anspruch 3, dadurch gekennzeichnet, daß jede Nut (32) zwischen den Flanken (28) der Nuten eine Rinne (34) besitzt, so daß bei einander berührenden Elementen ein Hohlraum (36) vorhanden ist.

9. Satz von Gegenständen nach Anspruch 1, dadurch gekennzeichnet, daß die beiden Hauptflächen (22) des ersten Gliedes (20) und des zweiten Gliedes (20') strukturierte Flächen sind.

10. Satz von Gegenständen nach Anspruch 1, dadurch gekennzeichnet, daß der strukturierten Fläche (22) entgegengesetzten Fläche (23) mindestens eines der Glieder (20, 20') eine Halterung (40, 42) zum Montieren des Gegenstandes zugeordnet ist.

11. Satz von Gegenständen nach Anspruch 1, dadurch gekennzeichnet, daß das erste Glied (20) und das zweite Glied (20') mindestens teilweise aus einem polymeren Werkstoff bestehen.

**Revendications**

1. Ensemble d'articles interconnectables, comprenant:
   un premier substrat (20) présentaux au moins une surface principale (22), et au moins une partie de ladite surface principale étant une surface structurée (24);
   un deuxième substrat (20') présentant au moins une surface principale, et au moins une partie de ladite surface principale étant une surface structurée;
   caractérisé en ce que lesdites surfaces structurées dudit premier substrat et dudit deuxième substrat comportent chacune une pluralité d'éléments effilés (26), chaque élément présentant au moins une face latérale (28) inclinée par rapport à un plan commun dans chacun desdits substrats suivant un angle (β) suffisant pour donner une forme de coin de sorte que lesdits éléments (26) dudit premier substrat (20) peuvent s'imbriquer avec lesdits éléments (26) dudit deuxième substrat (20') lorsqu'ils sont mis en contact mutuel le long desdites faces latérales inclinées et ledit premier substrat (20) peut adhérer audit deuxième substrat (20') au moins partiellement à cause de la force d'adhérence de frottement desdites faces en contact (28) lesdits éléments dudit premier substrat et desdits éléments dudit deuxième substrat, et dans lequel la tangente du demi-angle (β) des faces inclinées des éléments n'est pas supérieure au coefficient de frottement de la matière des surfaces en contact.

2. Ensemble d'articles suivant la revendication 1, caractérisé en outre en ce que les éléments dudit premier substrat sont des éléments positifs et les éléments dudit deuxième substrat sont des éléments négatifs, de sorte que lesdits éléments positifs peuvent s'imbriquer avec lesdits éléments négatifs et y adhérer lorsqu'ils sont mis en contact entre eux.

3. Ensemble d'articles suivant la revendication 1, caractérisé en outre en ce que chaque élément possède deux faces latérales et ladite pluralité d'éléments (26) sont disposés côte à côte pour définir une pluralité de saillies (30) et de rainures (32) linéaires, et en ce que les faces latérales (28) d'éléments adjacents constituent les côtés de chaque rainure.

4. Ensemble d'articles suivant la revendication 3, caractérisé en outre en ce que la force de retenue ayant son origine dans les faces latérales (28) des éléments imbriqués (26) est plus grande que la force associée au contact entre les saillies (30) et les fonds (34) des rainures.

5. Ensemble d'articles suivant la revendication 3, caractérisé en outre en ce que chaque élément (26) est non symétrique et il est incliné par rapport à l'axe de chaque élément perpendiculaire au plan desdits substrats.

6. Ensemble d'articles suivant la revendication 1, caractérisé en outre en ce que lesdites saillies (30) dudit premier substrat (20) et dudit deuxième substrat (20') sont tronconiques.

7. Ensembles d'articles suivant la revendication 6, caractérisé en outre en ce que les éléments d'au moins un substrat sont chanfreinés pour faciliter l'alignement desdits éléments.

8. Ensemble d'articles suivant la revendication 3, caractérisé en outre en ce que chaque rainure (32) comprend en outre une goulotte (34) entre les faces latérales (28) desdites rainures, pour définir une cavité (36) lorsque lesdits éléments sont mis en contact les uns avec les autres.

9. Ensemble d'articles suivant la revendication 1, caractérisé en outre en ce que les deux surfaces principales (22) dudit premier substrat (20) et du deuxième substrat (20') sont des surfaces structurées.

10. Ensemble d'articles suivant la revendication 1, caractérisé en outre en ce que des moyens de montage (40, 42) sont associés à la surface (23) d'au moins l'un desdits substrats (20, 20') opposée à la surface structurée (22), pour le montage dudit article.

11. Ensemble d'articles suivant la revendication 1, caractérisé en outre en ce que ledit premier substrat (20) et ledit deuxième substrat (20') sont au moins partiellement en une matière de type polymère.

FIG.1

FIG.5

FIG.6

FIG. 2

FIG. 3

FIG. 4

FIG.7

FIG.8

FIG.9

FIG.10